# EUROPÄISCHE PATENTANMELDUNG

(11) **EP 0 780 590 A1**
(43) Veröffentlichungstag der Anmeldung: **25.06.1997**
(21) Anmeldenummer: 96118258.1
(22) Anmeldetag: 14.11.1996
(51) Int. Cl.: F16D 23/06

(54) **Schaltvorrichtung eines Zahnräderwechselgetriebes eines Kraftfahrzeuges**

(30) Priorität: 19.12.1995 DE 19547492
(71) Anmelder: MERCEDES-BENZ AG, 70327 Stuttgart (DE)
(72) Erfinder: Schetter, Martin, 74354 Besigheim (DE)

(57) **Zusammenfassung**

Bei einer Schaltvorrichtung (4) eines Zahnräderwechselgetriebes (5) eines Kraftfahrzeuges sind eine formschlüssige Schaltkupplung (6) zum Ankuppeln eines Losrades (7,8) an seine Welle (40) und eine Doppelkonus-Synchronisierkupplung (13), die aus einem äusseren Synchronring (17), einem inneren Synchronring (19) und einem Zwischenring (14) besteht. Die Kupplungsglieder (25) des einen Synchronringes (19) stehen in Eingriff jeweils unmittelbar sowohl mit den Kupplungsglieder (27) des Schaltmuffenträgers (10) mit einem festgelegten Verdrehspiel (21) als auch mit den Kupplungsglieder (23) des anderen Synchronringes (17) in wesentlichen spielfrei.

## Beschreibung

Die Erfindung bezieht sich auf eine Schaltvorrichtung nach dem Oberbegriff von Patentanspruch 1.

Bei einer bekannten Schaltvorrichtung der eingangs genannten Art (VDI-Berichte 878 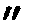 Getriebe in Fahrzeugen, heute und morgen", VDI-Verlag GmbH Düsseldorf, 1991, S. 319, Bild 7) weist die Anordnung zur drehfesten Verbindung der Kupplungsglieder des äußeren Synchronringes mit den Kupplungsgliedern des inneren Synchronringes wenigstens ein plattenförmiges Kupplungszwischenglied auf, welches mit dem festgelegten Verdrehspiel in einer korrespondierenden Ausnehmung des Schaltmuffenträgers angeordnet und mit axialen Durchgängen versehen ist, in welche die Kupplungsglieder der beiden Synchronringe jeweils in Form von axialen Ansätzen drehfest eingreifen. Diese Kupplungszwischenglieder erhöhen den baulichen Aufwand, die Herstellungskosten sowie die Toleranzkette der Schaltvorrichtung.

Aus der US-PS 5 135 087 ist eine Schaltvorrichtung anderer Art bekannt, bei welcher der mit dem äußeren Reibkonus des Zwischensynchronringes der Doppelkonus-Synchronisierkupplung in Reibkontakt bringbare äußere Synchronring einerseits durch eine erste Formschluß-Kupplung mit äußeren Kupplungsgliedern, die an seinem Außenumfang in Form von radialen Ansätzen vorgesehen sind, formschlüssig und im wesentlichen spielfrei mit dem die Schaltmuffe tragenden Zahnkranz des Schaltmuffenträgers gekuppelt ist, wobei die korrespondierenden Kupplungsglieder des Schaltmuffenträgers durch den Zahnkranz in Umfangsrichtung unterbrechende Aussparungen gebildet werden, in welche die radialen Ansätze des äußeren Synchronringes eingreifen. Andererseits ist der äußere Synchronring durch eine zweite Formschluß-Kupplung mit einem festgelegten Verdrehspiel mit inneren Kupplungsgliedern, die an seinem Innenumfang in Form von radialen Aussparungen ausgebildet sind, mit dem inneren Synchronring gekuppelt, wobei die korrespondierenden Kupplungsglieder des inneren Synchronringes durch axiale Ansätze gebildet werden, welche mit Verdrehspiel in die Aussparungen des äußeren Synchronringes eingreifen. Die für die erste Formschluß-Kupplung vorgesehenen Unterbrechungen des Zahnkranzes des Schaltmuffenträgers beeinträchtigen dessen Drehmomentübertragungsfähigkeit, wie auch die zusätzlichen inneren Kupplungsglieder des äußeren Synchronringes für die zweite Formschluß-Kupplung den baulichen Aufwand und die Herstellungskosten erhöhen.

Aus der DE-OS 1 910 844 ist eine Schaltvorrichtung für ein Zahnräderwechselgetriebe mit einer Synchronisiervorrichtung bekannt, welche mit mindestens einem begrenzt verdrehbar und mittels einer Schaltmuffe axial verschiebbar angeordneten Synchronring versehen ist, der über eine Synchronisierfläche mit einer an dem zu kuppelnden, in Form eines Kupplungsringes ausgebildeten Bauteil angebrachten Gegenfläche zusammenwirkt, wobei die Synchronisierkraft ganz oder teilweise durch eine Servoeinrichtung, z.B. durch zwischen dem Synchronring und dem Schaltmuffenträger eingesetzte, auf in Umfangsrichtung geneigten Schrägflächen auflaufende Anpreßkörper erzeugt wird. Um die bei bekannten Synchronisierungen durch die axial federnde Abstützung des mit dem Synchronring zusammenarbeitenden Kupplungsringes auftretenden Nachteile wie ein der Anpreßkraft entgegenwirkender nichtfedernder Widerstand und gefährliche Momentenspitzen zu vermeiden und dennoch bei einfachem Aufbau sowie hoher Betriebssicherheit und Lebensdauer einen selbsttätigen Synchronisiereffekt innerhalb einer äußerst kurzen Synchronisierzeit zu erzielen, ist bei dieser bekannten Schaltvorrichtung vorgesehen, daß der durch die Schaltmuffe mit dem Schaltmuffenträger zu kuppelnde Kupplungsring und/oder der Schaltmuffenträger zur Abstützung der Synchronisierkraft über Federelemente mit einem oder mehreren Bauteilen in Verbindung stehen.

Die der Erfindung zugrundeliegende Aufgabe besteht im wesentlichen darin, eine Schaltvorrichtung der eingangs genannten Art zu schaffen, bei welcher die Anordnung zur drehfesten Verbindung des äußeren Synchronringes mit dem inneren Synchronring wie auch deren Mittel zur Einhaltung des Verdrehspieles vereinfacht sind.

Die erläuterte Aufgabe ist gemäß der Erfindung mit den kennzeichnenden Merkmalen von Patenanspruch 1 in vorteilhafter Weise gelöst.

Bei der Schaltvorrichtung nach der Erfindung sind besondere Kupplungszwischenglieder entbehrlich, so daß die Herstellungskosten wie auch die Toleranzkette bei der Kupplung der betreffenden Synchronringe mit dem Schaltmuffenträger verringert sind. Die Fixierung des Verdrehspieles der Kupplungsglieder des einen Synchronringes gegenüber den zugeordneten Kupplungsgliedern des Schaltmuffenträgers ist einfacher zu realisieren als das Verdrehspiel der Kupplungszwischenglieder bei der bekannten gattungsgemäßen Schaltvorrichtung.

Bei der Schaltvorrichtung nach der Erfindung ist die durch den Eingriff der Kupplungsglieder des einen Synchronringes bedingte Schwächung des für die Drehmomentübertragung erforderlichen Querschnittes des Schaltmuffenträgers durch die Ausgestaltung nach Patentanspruch 2 vermindert.

Bei der Schaltvorrichtung nach der Erfindung ist die Anordnung zur drehfesten Verbindung der Kupplungsglieder des inneren und des äußeren Synchronringes durch die Ausgestaltung nach Patentanspruch 3 auf engstem Raum untergebracht.

Zu dieser vorteilhaften Raumausnutzung bei der Schaltvorrichtung nach der Erfindung trägt auch die Ausgestaltung nach Patentanspruch 4 bei.

Bei der Schaltvorrichtung nach der Erfindung ergeben sich für den inneren Synchronring durch die Maßnahme gemäß Patentanspruch 5 geringe Querschnittsabmessungen.

Bei der Schaltvorrichtung nach der Erfindung sind Taumelbewegungen des inneren Synchronringes durch die Anordnung nach Patentanspruch 6 eingeschränkt bzw. verhindert.

Bei der Schaltvorrichtung nach der Erfindung ist für den äußeren Synchronring ein besonders formsteifer Querschnitt durch die Ausgestaltung nach Patentanspruch 7 geschaffen.

Bei der Schaltvorrichtung nach der Erfindung ist die Verwendung eines gemäß Patenanspruch 8 als Blechpreßteil ausgebildeten äußeren Synchronringes besonders geeignet.

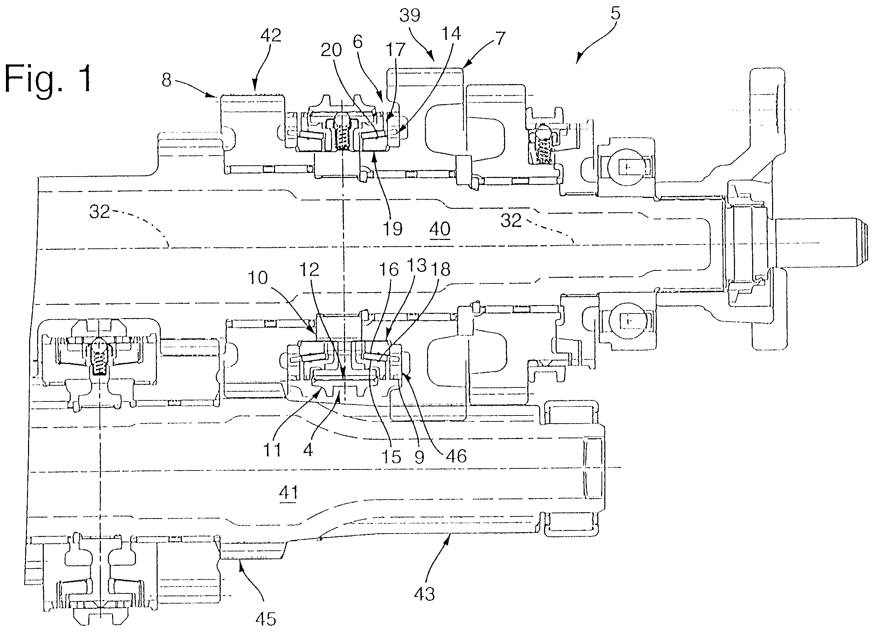

Die Erfindung ist nachstehend anhand einer in der Zeichnung schematisch dargestellten Ausführungsform näher beschrieben. In der Zeichnung bedeuten
- Fig. 1: einen Teilaxialschnitt durch ein Zahnräderwechselgetriebe mit einer Schaltvorrichtung nach der Erfindung,

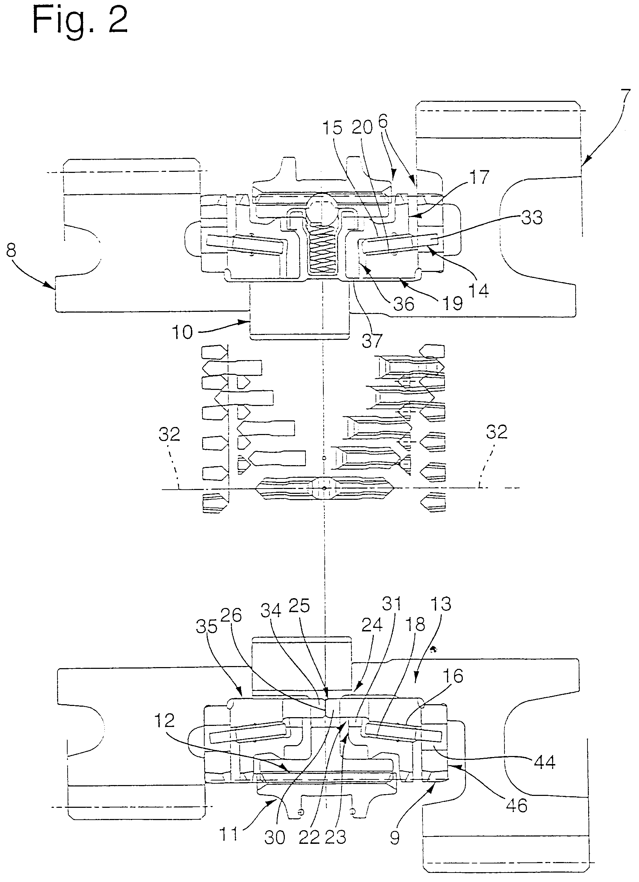

- Fig. 2: die Darstellung der Schaltvorrichtung von Fig. 1 in einem größeren Maßstab unter Weglassung von Welle und Zahnrädern, und
- Fig. 3: einen Querschnitt durch die Schaltvorrichtung der Fig. 1 nach Linie III-III und im Maßstab der Fig. 2.

In einem nicht näher dargestellten Getriebegehäuse eines Zahnräderwechselgetriebes 5 sind eine Ausgangswelle 40 und eine parallele Vorgelegewelle 41 drehbar und axial unverschiebbar gelagert, welche u. a. durch eine Zahnradstufe 39 für einen niedrigen Vorwärtsgang oder durch eine Zahnradstufe 42 für einen höheren Vorwärtsgang unter Vermittlung einer Schaltvorrichtung 4 nach der Erfindung in gegenseitige Antriebsverbindung bringbar sind.

Die Zahnradstufe 39 besteht aus einem zur Ausgangswelle 40 konzentrisch, drehbar und axial unverschiebbar angeordneten Losrad 7 in Form eines Stirnzahnrades sowie aus einem mit letzterem kämmenden Ritzel 43, welches zur Vorgelegewelle 41 konzentrisch und einteilig ausgebildet ist.

Die Zahnradstufe 42 besteht aus einem zur Ausgangswelle 40 konzentrisch, drehbar und axial unverschiebbar angeordneten Losrad 8 in Form eines Stirnzahnrades sowie aus einem mit letzterem kämmenden Stirnzahnrad 45, welches zur Vergelegwelle 41 konzentrisch und einteilig ausgebildet ist.

Das Losrad 7 ist durch eine formschlüssige Schaltkupplung 6 der Schaltvorrichtung 4 mit der Ausgangswelle 40 kuppelbar, um den niedrigen Vorwärtsgang einzulegen. Diese Schaltkupplung 6 weist einer Kupplungsring 46 auf, welcher zu der mit der Kupplungsachse 32-32 zusammenfallenden Drehachse des Losrades 7 konzentrisch und zum Losrad 7 bewegungsfest angeordnet ist sowie eine äußere axiale Kupplungsverzahnung 9 aufweist. Die Schaltkupplung 6 weist weiterhin einen axial zwischen den Losrädern 7 und 8 sowie konzentrisch und drehfest zur Ausgangswelle 40 angeordneten ringförmigen Schaltmuffenträger 10 sowie eine konzentrisch, drehfest und axial verschiebbar auf dem Schaltmuffenträger 10 angeordnete Schaltmuffe 11 auf. Die Schaltmuffe 11 ist mit einer inneren axialen Kupplungsverzahnung 12 versehen, welche durch die übliche Betätigung der Schaltmuffe 11 in die äußere Kupplungsverzahnung 9 einfahrbar ist.

Die Drehzahl des Losrades 7 ist vor dem Einrücken der Schaltkupplung 6 durch eine Doppelkonus-Synchronisierkupplung 13 an die Drehzahl der Ausgangswelle 40 anpaßbar. Diese Synchronisierkupplung 13 weist einen konzentrisch zur Kupplungsachse 32-32 angeordneten Zwischensynchronring 14 mit einem äußeren Reibkonus 15 und mit einem inneren Reibkonus 16 auf. Der Zwischensynchronring 14 ist auf seiner dem Kupplungsring 46 zugekehrten Stirnseite mit Ansätzen 33 versehen, welche sich im wesentlichen in Längsrichtung der Kupplungsachse 32-32 erstrecken und drehfest in korrespondierende Ausnehmungen 44 des Kupplungsringes 46 eingreifen.

Die Synchronisierkupplung 13 weist einen äußeren Synchronring 17 mit einem inneren Reibkonus 18 auf, welcher min dem äußeren Reibkonus 15 des Zwischensynchronringes 14 in Eingriff bringbar ist.
Die Synchronisierkupplung 13 ist weiterhin mit einem inneren Synchronring 19 mit einem äußeren Reibkonus 20 versehen, der mit dem inneren Reibkonus 16 des Zwischensynchronringes 14 in Eingriff bringbar ist.

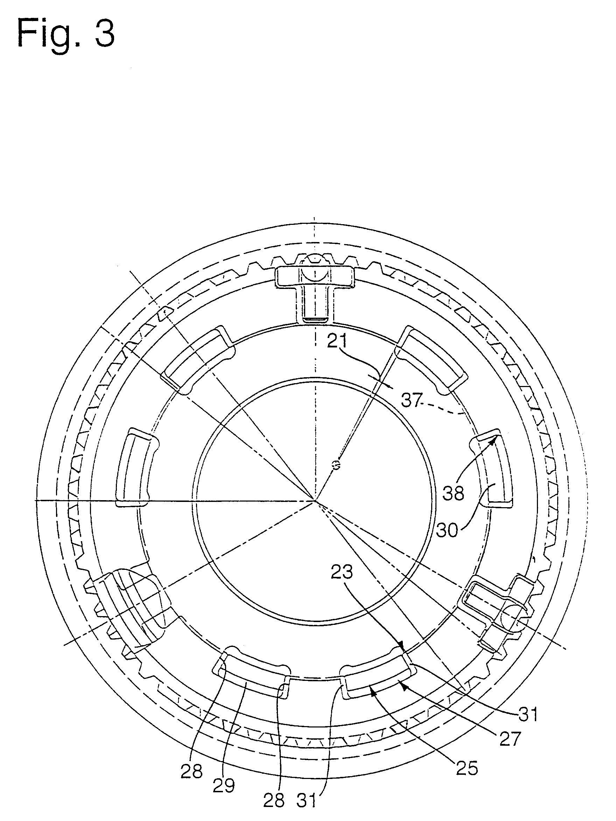

Der innere Synchronring 19 ist durch eine Formschluß-Kupplung 24 mit einem festgelegten Verdrehspiel 21 (Figur 3) mit dem Schaltmuffenträger 10 verbunden. Die ringseitigen Kupplungsglieder 25 der Formschluß-Kupplung 24 sind durch axiale Ansätze 30 gebildet, während für die trägerseitigen Kupplungsglieder 27 der Formschluß-Kupplung 24 axiale Durchgangsöffnungen 29 im Schaltmuffenträger 10 verwendet sind, in welche die korrespondierenden Ansätze 30 jeweils mit dem erwähnten Verdrehspiel 21 eingreifen.

Der äußere Synchronring 17 ist ebenfalls durch eine Formschluß-Kupplung 22 mit festgelegtem Verdrehspiel mit dem Schaltmuffenträger 10 verbunden, wobei die ringseitigen Kupplungsglieder 23 nicht direkt, sondern indirekt mit dem Schaltmuffenträger 10 in Eingriff stehen, indem diese Kupplungsglieder in Form von radialen Ansätzen 31 des Synchronringes 17 im wesentlichen drehfest zwischen die axialen Ansätze 30 des anderen Synchronringes 19 eingreifen, so daß das jeweilige Verdrehspiel 21 zwischen einer radialen Begrenzungsfläche 28 eines Durchganges 29 und dem betreffenden axialen Ansatz 30 auch für die Formschluß-Kupplung 22 wirksam ist.

Um den Taumelbewegungen des inneren Synchronringes 19 entgegen zu wirken, stützt sich dieser über die radialen Stirnflächen 26 seiner Ansätze 30 an den korrespondierenden Stirnflächen der axialen Ansätze 34 eines spiegelbildlich zum inneren Synchronring 19 angeordneten zweiten inneren Synchronringes 35 ab.

Der zweite innere Synchronring 35 ist Teil einer Doppelkonus-Synchronisierkupplung, welche entsprechend der Kupplung 13 ausgebildet - wirkungsmäßig jedoch zwischen dem Losrad 8 und der Ausgangswelle 40 angeordnet ist.

Der äußere Synchronring 17 weist an seinem dem Schaltmuffenträger 10 zugekehrten Ende einen radial nach innen abgewinkelten Ringflansch 36 auf, von dessen Innenumfang 37 radiale Ausnehmungen 38 ausgehen, durch welche die in Umfangsrichtung dazwischen liegenden radialen Ansätze 31 gebildet werden.

Das Einrücken der Schaltkupplung 6 und der Synchronisierkupplung 13 durch Betätigen der Schaltmuffe 11 ist bekannt und nicht Gegenstand der vorliegenden Erfindung.

## Patentansprüche

1. Schaltvorrichtung (4) eines Zahnräderwechselgetriebes (5) eines Kraftfahrzeuges, mit einer formschlüssigen Schaltkupplung (6) zum Ankuppeln eines Losrades (7) an seine Welle (40), mit einer konzentrisch und bewegungsfest zum Losrad (7) angeordneten äußeren axialen Kupplungsverzahnung (9), mit einem konzentrisch und bewegungsfest zur Welle (40) angeordneten Schaltmuffenträger (10), mit einer zum Schaltmuffenträger (10) konzentrisch, drehfest und axial verschiebbar angeordneten Schaltmuffe (11), mit einer zur Schaltmuffe (11) konzentrisch und bewegungsfest angeordneten inneren axialen Kupplungsverzahnung (12), die mit der äußeren Kupplungsverzahnung (9) in Eingriff bringbar ist, mit einer wirkungsmäßig zwischen Welle (40) und Losrad (7) angeordneten Doppelkonus-Synchronisierkupplung (13), mit einem zur Welle (40) konzentrisch und zum Losrad (7) drehfest angeordneten Zwischensynchronring (14) mit je einem äußeren (15) und inneren (16) Reibkonus, mit einem zur Welle (40) konzentrisch angeordneten radial äußeren Synchronring (17) mit einem inneren Reibkonus (18), der mit dem äußeren Reibkonus (15) des Zwischensynchronringes (14) in Eingriff bringbar ist, mit einem zur Welle (40) konzentrisch angeordneten radial inneren Synchronring (19) mit einem äußeren Reibkonus (20), der mit dem inneren Reibkonus (16) des Zwischensynchronringes (14) in Eingriff bringbar ist, mit einer ein festgelegtes Verdrehspiel (21) aufweisenden und wirkungsmäßig zwischen dem Schaltmuffenträger (10) und dem äußeren Synchronring (17) angeordneten Formschluß-Kupplung (22), welche wenigstens ein zum äußeren Synchronring (17) bewegungsfestes Kupplungsglied (23) aufweist, mit einer ein festgelegtes Verdrehspiel (21) aufweisenden und wirkungsmäßig zwischen dem Schaltmuffenträger (10) und dem inneren Synchronring (19) angeordneten Formschluß-Kupplung (24), welche wenigstens ein zum inneren Synchronring (19) bewegungsfestes Kupplungsglied (25) aufweist, mit einer Anordnung (30, 31) zur drehfesten Verbindung der Kupplungsglieder (23) des äußeren Synchronringes (17) mit den Kupplungsgliedern (25) des inneren Synchronringes (19), und bei der die beiden Formschluß-Kupplungen (22, 24) wenigstens ein gemeinsames, zum Schaltmuffenträger (10) bewegungsfest angeordnetes Kupplungsglied (29) aufweisen,
**dadurch gekennzeichnet,**
daß die Kupplungsglieder (25) des einen Synchronringes (19) jeweils unmittelbar sowohl mit den Kupplungsgliedern (27) des Schaltmuffenträgers (10) mit dem festgelegten Verdrehspiel (21) als auch mit den Kupplungsgliedern (23) des anderen Synchronringes (17) im wesentlichen spielfrei in Eingriff stehen.

2. Schaltvorrichtung nach Anspruch 1,
**dadurch gekennzeichnet,**
daß die den beiden Formschluß-Kupplungen (22, 24) gemeinsamen Kupplungsglieder (27) des Schaltmuffenträgers (10) durch radiale Begrenzungsflächen (28) von axialen Durchgangsöffnungen (29) gebildet werden.

3. Schaltvorrichtung nach Anspruch 1 oder 2,
**dadurch gekennzeichnet,**
daß die mit den zum Schaltmuffenträger (10) bewegungsfesten Kupplungsgliedern (27) in Eingriff stehenden Kupplungglieder (25) des einen Synchronringes (19) durch axiale Ansätze (30) und die Kupplungsglieder (23) des anderen Synchronringes (17) durch radiale Ansätze (31) gebildet werden.

4. Schaltvorrichtung nach einem der Ansprüche 1 bis 3,
**dadurch gekennzeichnet,**
daß der Zwischensynchronring (14) auf seiner zum Schaltmuffenträger (10) entgegengesetzt liegenden Stirnseite sich im wesentlichen in Längsrichtung der Kupplungsachse (32-32) erstreckende Ansätze (33) aufweist, welche gegenüber dem Losrad (7) drehfest festgelegt sind.

5. Schaltvorrichtung nach einem der Ansprüche 1 bis 4,
**dadurch gekennzeichnet,**
daß die Kupplungsglieder (25) des inneren Synchronringes (19) mit den Kupplungsgliedern (27) des Schaltmuffenträgers (10) in Eingriff stehen.

6. Schaltvorrichtung nach Anspruch 5,
**dadurch gekennzeichnet,**
daß die axialen Ansätze (30) des inneren Synchronringes (19) mit ihren Stirnflächen (26) jeweils an einer Stirnfläche eines axialen Ansatzes (34) eines spiegelbildlich zum inneren Synchronring (19) angeordneten zweiten inneren Synchronringes (35) axial abstützbar sind.

7. Schaltvorrichtung nach Anspruch 5 oder 6,
**dadurch gekennzeichnet,**
daß der äußere Synchronring (17) an seiner dem Schaltmuffenträger (10) zugekehrten Stirnseite einen radial nach innen abgewinkelten Ringflansch (36) aufweist, von dessen Innenumfang (37) radiale Ausnehmungen (38) ausgehen, in welche jeweils ein axialer Ansatz (30) des inneren Synchronringes (19) eingreift.

8. Schaltvorrichtung nach Anspruch 7,
**dadurch gekennzeichnet,**
daß der äußere Synchronring (17) als Blechpreßteil ausgebildet und bei seiner Herstellung durch einen Tiefzieh-Arbeitsschritt in ein vorgezogenes topfförmiges Hohlteil gebracht ist, und daß der Boden des topfförmigen Hohlteiles als Zuschnitt für den Ringflansch (36) und die Ausnehmungen (38) verwendet ist.
